Europäisches Patentamt

European Patent Office

Office européen des brevets

(11) Publication number: **0 180 195**
A2

# EUROPEAN PATENT APPLICATION

(21) Application number: **85113742.2**

(22) Date of filing: **29.10.85**

(51) Int. Cl.⁴: **B 23 H 7/10**

(30) Priority: **29.10.84 JP 225679/84**

(43) Date of publication of application: **07.05.86**
Bulletin 86/19

(84) Designated Contracting States: **CH DE GB LI**

(71) Applicant: **MITSUBISHI DENKI KABUSHIKI KAISHA, 2-3, Marunouchi 2-chome Chiyoda-ku, Tokyo 100 (JP)**

(72) Inventor: **Ito, Haruhiko Mitsubishi Denki K. K., Nagoya Works No. 1-14, Yadaminami 5-chome, Higashi-ku Nagoya-shi Aichi (JP)**
Inventor: **Shibata, Yoshio Mitsubishi Denki K. K., Nagoya Works No. 1-14, Yadaminami 5-chome, Higashi-ku Nagoya-shi Aichi (JP)**
Inventor: **Banzai, Masato Mitsubishi Denki K. K., Nagoya Works No. 1-14, Yadaminami 5-chome, Higashi-ku Nagoya-shi Aichi (JP)**
Inventor: **Kitora, Yoshihisa Mitsubishi Denki K. K., No. 1-1 Tsukaguchi Honmachi 8-chome, Amagasaki-shi Hyogo (JP)**

(74) Representative: **Hoffmann, Klaus, Dr. rer. nat. et al, Hoffmann . Eitle & Partner Patentanwälte Arabellastrasse 4, D-8000 München 81 (DE)**

(54) **Wire electrode discharge machining apparatus.**

(57) A wire electrode discharge machining apparatus in which there is provided at least one groove (19, 20) at the end portion of a jet nozzle (17, 18) through which a machining liquid (10) is jetted in order to obstruct the flow of the liquid (10) flowing into the gap space between the end portion of the nozzle (7, 8) and a workpiece (12), thereby increasing the flow of the liquid flowing along a machined slit and further improving the chip (14) exhausting performance.

# WIRE ELECTRODE DISCHARGE MACHINING APPARATUS

The present invention relates to a wire electrode discharge machine apparatus in which machining liquid is supplied between a wire electrode and a workpiece and a discharge is generated in the machining liquid between the wire electrode and the workpiece.

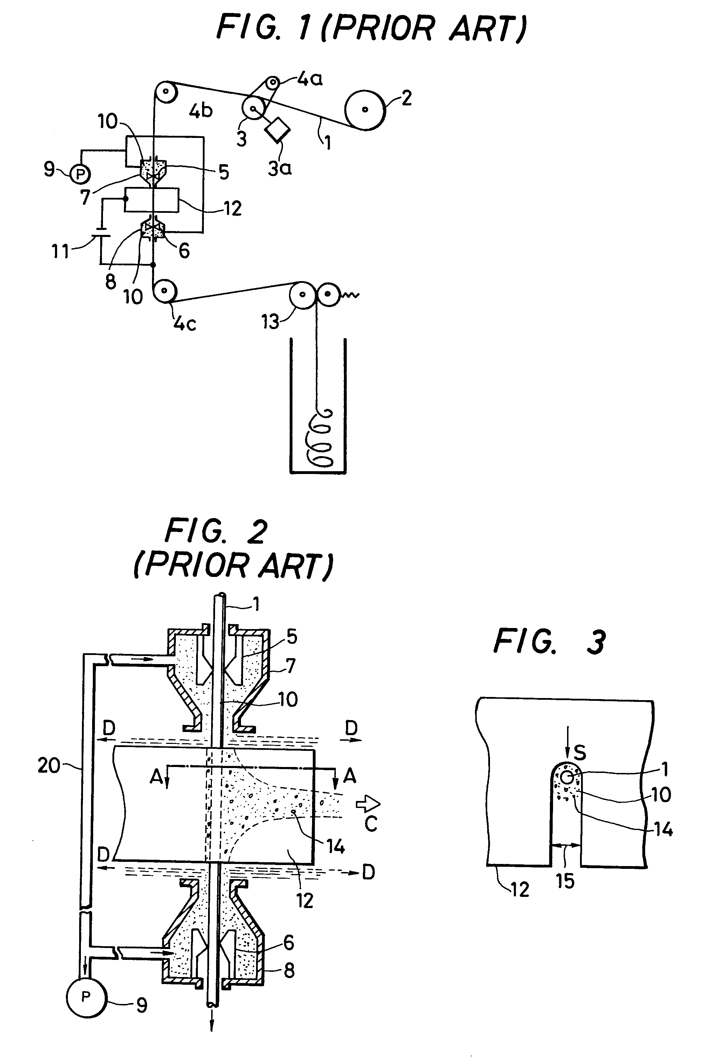

Fig. 1 of the accompanying drawings shows an example of a conventional wire electrode discharge machining apparatus. Fig. 2 shows an enlarged and sectional view of main portions of the apparatus of Fig. 1. In Fig. 1, reference numeral 1 denotes a wire electrode supplied from a supply bobbin 2; 3, a brake roller operatively connected to an electromagnetic brake 3a for providing a predetermined tension to the wire 1; 4a, 4b and 4c, idler wheels for changing the moving direction of the wire 1; and 5 and 6 an upper guide, and a lower guide, respectively, mounted coaxially within an upper jet nozzle 7 and a lower jet nozzle 8, respectively. Hereinafter, the upper and lower jet nozzles are referred to simply as nozzles 7 and 8 respectively. Reference numeral 9 denotes a supply pump

- 2 -

for supplying a well-known machining liquid 10 to the nozzles 7 and 8 through a pipe 20. The wire electrode 1 is supported by the upper guide 5 and the lower guide 6, and the guides 5 and 6 are disposed opposite to a workpiece 12. Reference numeral 11 denotes a pulse power source for generating a discharge between the wire electrode 1 and the workpiece 12, and 13 denotes feeding rollers for feeding the wire electrode 1 at a predetermined feeding rate.

In the operation of the conventional apparatus thus constructed, the machining liquid 10 is jetted from the nozzle 7 in the direction which is the same as the feeding direction of the wire electrode 1, and the pulse voltage from the pulse power source 11 is applied between the wire electrode 1 and the workpiece 12. Simultaneously, the workpiece 12 is moved with respect to the wire electrode 1 in the direction S indicated in Fig. 3. The discharge is continued in the small gap between the wire electrode 1 and the workpiece 12 in the machining liquid 10, and the workpiece 12 is made molten.

Some of the molten metal is spattered by the heat energy due to the discharge. The chips 14 spattered from the workpiece 12 are exhausted via a machined slit 15 together with the machining liquid 10. Therefore, the flow of the machining liquid 10 used for exhausting the chips 14 produced from the workpiece 12 is divided into the flow C flowing in the machined slit 15 and the flow D along the surfaces of the workpiece 12.

Usually, by using a numeral control device, an X-Y cross table (not shown) is moved to move the workpiece 12 with respect to the wire electrode 1 in order to effect a continuous discharge while maintaining a constant small gap therebetween. By the continuous discharge and the control of the X-Y cross table, the machined slit 15 is continuously formed in accordance with the movement of the workpiece 12 with respect to the wire electrode 1 in a direction parallel to the movement direction of the workpiece 12. By such control, the workpiece 12 may be machined in a desired form.

According to the conventional wire electrode discharge machining apparatus thus constructed, since it is not possible to increase the flow rate of the machining liquid 10 fed to the machined slit 15, the exhausting performance of the chips 14 is often not sufficient; that is the retention time of the chips 14 in the machined slit 15 is long. If the electric energy supplied from the power source 11 is increased to increase the machining speed, there occur disadvantages such as disconnection of

- 4 -

0180195

the wire electrode and unstable discharge.

The present invention has been made for eliminating the above-mentioned disadvantages, and it is an object of the present invention to provide a wire electrode discharge machining apparatus with an improved chip exhausting performance and a high machining speed.

For the purpose of achieving the above object of the present invention, there are provided grooves at the end portion of a jet nozzle, used for jetting a machining liquid ,exhausting chips produced during discharge machining, for obstructing the flow of the machining liquid.

According to the present invention thus constructed, the flow of the machining liquid flowing on the surfaces of the workpiece is obstructed by the grooves mounted at the end portion of the jet nozzle, and therefore the amount of the liquid flowing into the machined slit is increased, increasing the chip exhausting speed.

For a better understanding of the invention, and to show how the same may be carried into effect, reference will now be made, by way of example, to the accompanying drawings, in which:

Fig. 1 shows an example of a conventional wire electrode discharge machining apparatus;

Fig. 2 is an enlarged and sectional view of a

- 5 -

main portion of the apparatus of Fig. 1;

Fig. 3 is a sectional view taken along a line A-A in Fig. 2;

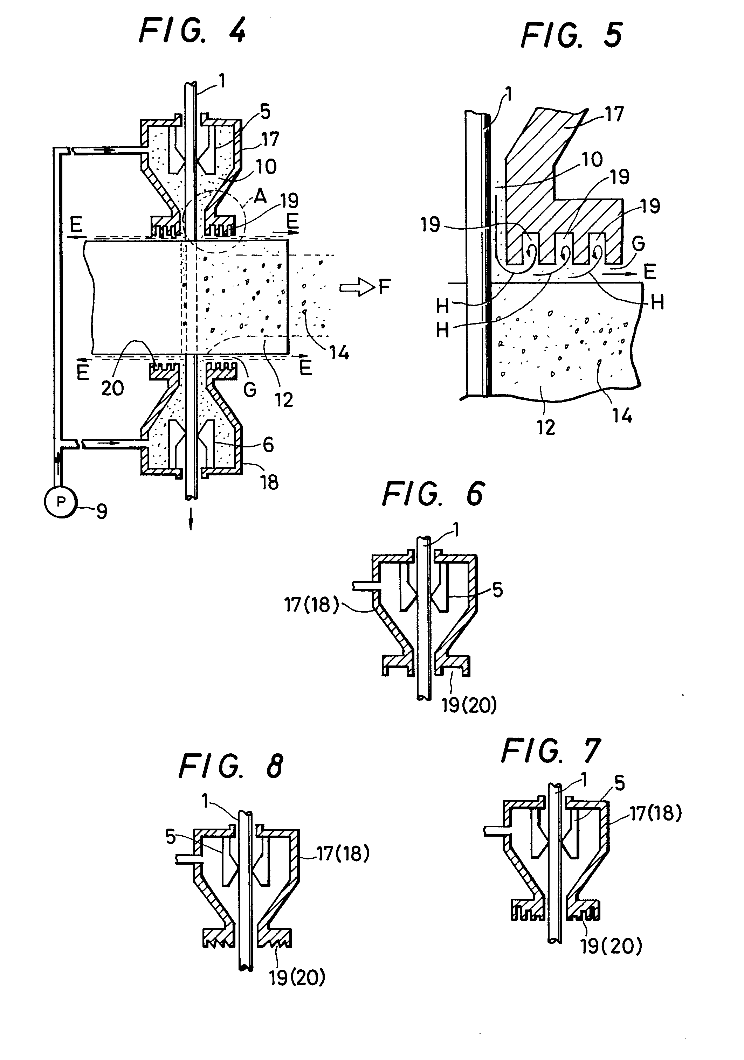

Fig. 4 is a sectional view of a preferred embodiment of the present invention;

Fig. 5 is an enlarged and sectional view of a portion A in Fig. 4; and

Figs. 6 through 8 are sectional views showing modifications of the jet nozzle of the above embodiment.

In Figs. 6 to 8, the same reference numerals as used in Figs. 1 to 3 indicate like elements, and therefore a further explanation is omitted.

Reference numerals 17 and 18 denote jet nozzles used for the same purpose as the jet nozzles 7 and 8, respectively. The jet nozzles 17 and 18 are disposed opposite to each other with respect to the workpiece 12. A plurality of grooves 19 and 20 are provided at the end portions respectively opposite to the front and back surfaces of the workpiece 12 of the jet nozzles 17 and 18, respectively, coaxially with the jet outlets of the jet nozzles 17 and 18. As shown in Fig. 5, each of the grooves 19 and 20 has an inverted U shape in section.

The dimension of the gap space between the end

- 6 -

portion of each nozzle and the surface of the workpiece 12 is reduced in comparison with that in Fig. 2 (showing a conventional jet nozzle) by the depth of the grooves 19 and 20.

In the operation of the jet nozzle of the preferred embodiment of the present invention, the machining liquid 10 is jetted onto the surface of the workpiece 12 and then flows into the gap space between the end portion of the nozzle and the surface of the workpiece 12 in the direction shown by an arrow E in Fig. 4. Because the gap space is reduced in comparison with the conventional apparatus, an eddy current of the machining liquid 10 is produced in the grooves 19 and 20, as shown by the line H in Fig. 5. Due to the eddy current of the machining liquid 10, the resistance of flow in the gap space G is increased, thereby reducing the flow rate in the direction E. In accordance with the reduction of the flow rate into the gap space G, the flow rate of liquid flowing into the machined slit 15 (in the direction F) is increased. This is similar to the case of the nozzle 18.

Referring to Fig. 6, a modification of the jet nozzle is shown. In Fig. 6 a single groove 19 (20) is provided at the end portion of the nozzle 17 (18), which single groove 19 (20) is formed in a U shape in a sectional view.

In Fig. 7 showing another modification of the jet nozzle, there are provided plural grooves 19 (20), each of which has a U shape in a sectional view. The depth of the grooves 19 (20) increases towards the outside.

In Fig. 8 showing a still further modification of the jet nozzle, there are provided a plurality of grooves 19 (20) formed in a V shape in sectional view. Such groove are coaxial with each other in a ring-like formation, similar to the case of Fig. 4.

As mentioned above, according to the present invention, chips produced from the workpiece are effectively exhausted from the machined slit. Due to the provision of the grooves at the end portion of the nozzle, the flow rate of the machining liquid flowing into the gap space is restricted, and hence the flow rate of the machining liquid flowing into the machined slit is increased. Therefore, a large discharge energy can be employed, increasing the machining speed.

Claims:

1. Wire electrode discharge machining apparatus comprising a wire electrode (1) disposed opposite a workpiece (12) with a small gap therebetween; a pair of machining liquid jetting nozzles (17,18), each of which is arranged opposite to said workpiece (12), and said wire electrode (1) being passed through said machining liquid jetting nozzles (17,18); and means (9) for supplying machining liquid (10) to said machining liquid jetting nozzles (17,18); characterised in that each of said machining liquid jetting nozzles (17,18) has an outlet from which said machining liquid (10) is jetted and through which said wire electrode is passed, and a recess portion (19,20) for obstructing the flow of said machining liquid (10) jetted from said outlet at a periphery portion of said outlet.

2. Wire electrode discharge machining apparatus according to claim 1 wherein said machining liquid jetting nozzles (17,18) are arranged opposite to each other and face said workpiece (12).

3. Wire electrode machining apparatus according to claim 1 or 2 wherein said recess portion (19,20) of said nozzle is formed in a ring-like formation.

4. Wire electrode discharge machining apparatus according to any one of claims 1 to 3 wherein said recess portion is arranged portion is arranged coaxially with said nozzle (7,8).

5. Wire electrode discharge machining apparatus according to any one of claims 1 to 4 wherein said recess portion is composed of a plurality of recesses (19,20) arranged coaxially and in a ring-like formation.

6. Wire electrode discharge machining apparatus according to claim 5 wherein said recesses (19,20) have a depth increasing with distance towards an outside position.

7. Wire electrode discharge machining apparatus according to claim 5 or 6 wherein said recess portion (19,20) has a U shape or a V shape in sectional view.

8. Wire electrode discharge machining apparatus according to any one of claims 1 to 7 wherein said wire electrode (1) is moved in an axial direction thereof during a machining operation.

# FIG. 1 (PRIOR ART)

# FIG. 2 (PRIOR ART)

# FIG. 3

FIG. 4

FIG. 5

FIG. 6

FIG. 8

FIG. 7